# EUROPÄISCHE PATENTSCHRIFT

(11) **EP 3 303 542 B1**
(45) Veröffentlichungstag und Bekanntmachung des Hinweises auf die Patenterteilung: **03.07.2019**
(21) Anmeldenummer: 16726538.8
(22) Anmeldetag: 30.05.2016
(51) Int. Cl.: C12G 3/00, C12G 3/06

(54) **FRUCHTHALTIGES ALKOHOL-SNACKPRODUKT**
FRUIT AGENT CONTAINING ALCOHOL SNACK PRODUCT
PRODUIT DE GRIGNOTAGE À BASE D'ALCOOL CONTENANT DES FRUITS

(30) Priorität: 01.06.2015 EP 15170109
(43) Veröffentlichungstag der Anmeldung: 11.04.2018
(73) Patentinhaber: Wagle, Friedrich, 32760 Detmold-Hiddesen (DE)
(72) Erfinder: Wagle, Friedrich, 32760 Detmold-Hiddesen (DE)
(74) Vertreter: Ter Meer Steinmeister & Partner
(86) Internationale Anmeldenummer: PCT/EP2016/062163
(87) Internationale Veröffentlichungsnummer: WO 2016/193210

(56) Entgegenhaltungen:
- WO-A1-96/11578
- DE-A1- 2 438 152
- DE-A1- 19 500 919
- US-A- 3 647 472
- US-A1- 2003 219 517
- US-A1- 2011 300 264

## Beschreibung

Die Erfindung betrifft ein Verfahren zum Herstellen eines verpackten, konsumfertig gemischten Alkohol-Snackprodukts.

### Hintergrund der Erfindung

WO 03/020869 A1 beschreibt eine Getränkemischung für Fruchtgetränke (Frozen Fruit Drinks), die sich nach dem Mischen mit Eis nicht wesentlich entmischt. Die Getränkemischung kann nichtalkoholisch sein oder Alkohol enthalten. In einem Beispiel wird eine Konzentratmischung mit Eis gemischt und in einem Mischer gemischt, um das Eis zu zerstoßen. In einem anderen Beispiel wurde eine Konzentratmischung mit Wasser gemischt und gekühlt und zu einem Slush verarbeitet. Nachteilig ist, dass die Konzentrate noch mit Wasser und/oder Alkohol versetzt werden müssen und mit Eis versetzt oder in einer Slush-Maschine zubereitet werden müssen, um ein servierfertiges Getränk zu erhalten.

EP 0268097 A1 beschreibt ein alkoholisches Softeis aus Wasser, Zuckerstoffen, Alkohol, Aromen und Carboxymethylcellulose.

EP 2442669 B1 beschreibt ein Slush-Getränk, das durch Einfrieren in einem Haushaltsgefriergerät gebildet wird. Die alkoholische Getränkezusammensetzung enthält beispielsweise Zitronen- oder Orangenaroma, Neutralalkohol, Fruktose, Glukose, Zitronensäure sowie Stigmasterol und wird in Flaschen abgefüllt. In der Flasche ist ein Freiraum vorgesehen, um das Aufschütteln des Produktes zu gestatten, falls die enthaltenen Eiskristalle zu groß geworden sind. Als Aromen werden Emulsions-basierte oder Ethanol- und/oder Propylenglykol-basierte Aromen beschrieben. Stigmasterol ist als Eis-Nukleierungsmittel vorgesehen. Nachteilig ist. dass bei einem lediglich auf Aromastoffen, Säuerungsmittel und Zuckerarten basierenden Geschmack dieser oft als unbefriedigend oder künstlich empfunden wird. Nachteilig ist zudem, dass sich das Slush-Getränk, das beispielsweise zu einem Block frieren kann, nur schlecht aus der Kunststoffflasche entnehmen lässt.

GB 1331518 beschreibt ein Slush-Getränk, das in einem teilweise gefrorenen Zustand in einem löffenbaren Zustand zur Verdünnung mit Wasser vorgesehen ist. Als Gefrierpunkt-Erniedrigungsmittel ist ein mehrwertiger Alkohol vorgesehen, beispielsweise Propylenglykol, Glycerin oder Sorbit. In einigen Beispielen besteht die Zusammensetzung zum überwiegenden Teil aus Wein. In einem weiteren Beispiel ist vorgesehen, dass aus dem teilweise gefrorenen Produkt durch Mischen mit einer Menge einer alkoholische Flüssigkeit ein Slush-Cocktail zubereitet wird. Nachteilig ist insbesondere, dass zur Gefrierpunktserniedrigung mehrwertiger Alkohol, insbesondere Glycerin vorgesehen ist, und dass das Produkt nicht trinkfertig zubereitet ist.

WO 96/11578 A1 beschreibt ein zum Einfrieren bereites alkoholisches Getränk mit einem Alkoholgehalt von 3 bis 24 Vol.-% (6 - 28 proof), sowie eine Verpackung für das Getränk in Form eines laminierten flexiblen Plastikbeutels. In einem Beispiel beinhaltet das Getränk 12,5 Gew.-% einer Spirituose mit 40 Vol.-% Ethanol, 7,9 Gew.-% Saccharose, Maissirup, davon Dextrose 4,39 Gew.-% bezogen auf das Getränk, Zitronensäure, Natriumcitrat, Stabilisatoren, Kaliumsorbat und Natriumbenzoat, Aroma und Wasser.

DE 195 00 919 A beschreibt eine alkoholhaltige Instant-Getränkemischung, enthaltend eine alkoholische Komponente und nichtflüchtige Komponenten. In einem Beispiel wird zu einer Mischung der nichtflüchtigen Komponenten Maltodextrin, Zucker, Milchpulverzubereitung, Fruchtpulver und Ballaststoffe eine aromawirksame Substanz gegeben. In einem Beispiel ist die aromawirksame Substanz ein Fruchtpulver.

DE 24 38 152 A1 beschreibt ein alkoholhaltiges, trübstabiles Citrusgetränk, sowie ein Citrusfruchtsaft-Konzentrat zur Herstellung des Getränkes.

US 2011/0300264 A1 beschreibt ein gefrorenes Instant-Getränkeprodukt.

US 3 647 472 A beschreibt eine Getränkemischungszusammensetzung zum Kombinieren mit einem alkoholischen Destillat zur Bildung eines alkoholischen Cocktails.

US 2003/0219517 A1 beschreibt ein alkoholisches gefrorenes gefrorenes Getränk.

### Offenbarung der Erfindung

Bei der Herstellung eines konsumfertigen Alkohol-Snackprodukts mit fruchtigem Geschmack, beispielsweise nach Art einer Frozen Margarita, stellt sich die Aufgabe, einen gewünschten fruchtigen Geschmack zu erzielen in Verbindung mit einer gewünschten, pastösen, fließfähigen Konsistenz im gekühlten Zustand auf Temperaturen unterhalb von 0°C, insbesondere unterhalb -6°C. Es ist wünschenswert, dass das Produkt lagerfähig bei Raumtemperatur ist und vom Endverbraucher vor dem Verzehr beispielsweise in einem Tiefkühlfach eines Kühlschranks gekühlt werden kann, so dass es im gekühlten Zustand genossen werden kann.

Die Aufgabe wird erfindungsgemäß gelöst durch ein Verfahren zum Herstellen eines verpackten, konsumfertig gemischten, fruchthaltigen Alkohol-Snackprodukts, umfassend:
(a) Herstellen einer fruchthaltigen Alkohol-Snackzusammensetzung durch Mischen von:
   Ethylalkohol und/oder wenigstens eine Spirituose mit wenigstens 37,5% Vol.-% Ethylalkohol, in einer Gesamtmenge entsprechend einem Anteil an der Alkohol-Snackzusammensetzung von 5 bis 20 Gew.-% Ethylalkohol,
   4 bis 25 Gew.-% Fruchtpulver, wobei das Fruchtpulver optional wenigstens einen Trägerstoff und/oder wenigstens einen Säureregulator enthält,
   zusätzlich 3 bis 9 Gew.-% Dextrose und 2 bis 7 Gew.-% Saccharose,
   Süßstoff, Säuerungsmittel, Aroma, Verdickungsmittel, Konservierungsmittel,
   Rest Wasser; und
(b) Einfüllen der Alkohol-Snackzusammensetzung in ein flexibles Behältnis und Verschließen des Behältnisses.

Die Aufgabe wird weiter gelöst durch ein verpacktes, konsumfertig gemischtes, fruchthaltiges Alkohol-Snackprodukt nach Anspruch 8.

Durch die erfindungsgemäße Zusammensetzung wird ein unerwartet guter Geschmack des gekühlten Produkts erzielt, wobei zugleich eine an ein Slush-Getränk oder einen Frozen Cocktail, beispielsweise Frozen Margarita, erinnernde Konsistenz erreicht wird, ohne dass es beim Kühlen des Produkts zur Bildung von scharfkantigen Eiskristallen kommt, die beim Trinken im Mund als unangenehm empfunden würden. Die Zusammensetzung erlaubt es daher, das fertig verpackte Produkt im ruhenden Zustand auf Temperaturen von beispielsweise -6° C bis -18° C, besonders bevorzugt auf -12° C bis -32° C herunter zu kühlen, wobei die Zusammensetzung fließfähig bleibt. Da insbesondere während des Kühlens nicht gerührt werden braucht, ist das Produkt als Convenience-Produkt besonders gut geeignet. Es kann beispielsweise im nicht gekühlten Zustand bei Raumtemperatur gelagert und gehandelt werden und erst bei Bedarf, beispielsweise vom Endverbraucher, im Tiefkühlfach eines handelsüblichen Kühlschranks gekühlt werden.

Es entfällt nicht nur die Beimischung einer Spirituose, wenn die Zusammensetzung serviert werden soll, sondern der bereits in dem fertigen Produkt enthaltene Alkohol trägt zusammen mit den abgestimmten Gehalten an Traubenzucker (Dextrose) und Zucker (Saccharose) zur gewünschten pastösen Konsistenz im gekühlten Zustand bei.

Durch die Verwendung von Fruchtpulver, dessen wesentlicher Bestandteil neben einem Trägerstoff und gegebenenfalls einem Säuerungsmittel wie Zitronensäure die natürliche Frucht ist, wird in Verbindung mit dem unterstützenden Aroma, dem Säuerungsmittel und insbesondere der Kombination aus Süßstoff, Zucker und Dextrose ein überzeugender, besonders guter Geschmack erzielt, insbesondere im Zusammenspiel mit der im Mund spürbaren weichen Konsistenz.

Mengenbereiche für die Komponenten der Zusammensetzung sind in den unabhängigen Ansprüchen angegeben. Bevorzugte Ausführungsformen sind in den abhängigen Ansprüchen angegeben.

Aus geschmacklichen Gründen sollte der Alkoholgehalt 20 Gew.-% nicht übersteigen. Zur Erzielung eines ansprechenden Geschmacks sollte der Alkoholgehalt der Zusammensetzung auf 5 bis 20 Gew.-% begrenzt sein, vorzugsweise 8 bis 16 Gew.-%, weiter bevorzugt 9 bis 15 Gew.-%, und besonders bevorzugt 10 bis 13 Gew.-%. Als optimal wurde bei Versuchen ein Alkoholgehalt von etwa 11 bis 12 Gew.-% empfunden.

Als Alkoholkomponente der Zusammensetzung wird vorzugsweise Ethylalkohol landwirtschaftlichen Ursprungs verwendet, auch als Agraralkohol, Trinkalkohol, Neutralalkohol oder Weingeist bezeichnet. Er kann beispielsweise mit einer Reinheit, d.h. Alkoholgehalt, von 96,4 Vol.-% unter der Bezeichnung Weingeist, Primasprit oder Neutralalkohol bezogen werden.

Für die Alkoholkomponente kann jedoch auch eine Spirituose oder eine Mischung von Spirituosen verwendet werden. Die jeweilige Spirituose hat vorzugsweise einen Alkoholgehalt von wenigstens 37,5 Vol.-%, besonders bevorzugt wenigstens 40 Vol.-%.

Es kann beispielsweise eine Spirituose verwendet werden, die aus Ethylalkohol landwirtschaftlichen Ursprungs gewonnen wird, beispielsweise Gin oder Wodka.

Es kann beispielsweise eine Spirituose verwendet werden, die durch Destillation gewonnen wird, beispielsweise Rum, Whisky, Weinbrand oder eine Getreidespirituose, insbesondere Korn.

Für die Fruchtkomponente der Zusammensetzung wird Fruchtpulver verwendet. Es kann sich beispielsweise um reines Fruchtpulver handeln, das beispielsweise durch Gefriertrocknung hergestellt wird. Es kann sich auch um ein Fruchtpulver handeln, welches einen Trägerstoff und/oder einen Säureregulator enthält. Als Trägerstoff kann beispielsweise Maltodextrin oder Stärke vorhanden sein. Als Säureregulator kann beispielsweise Zitronensäure vorhanden sein. Der Fruchtanteil des Fruchtpulvers kann beispielsweise wenigstens ca. 30 Gew.-%, vorzugsweise wenigstens ca. 40% betragen. Das Fruchtpulver hat vorzugsweise Korngrößen (Siebung) bis ca. 1 mm.

Fruchtpulver bietet den Vorteil, dass es sich mit den übrigen Zutaten gut vermischen lässt und sich die gewünschte Konsistenz auf definierte Weise erzeugen lässt, anders als beispielsweise bei der Verwendung von frischem, püriertem Obst oder von Obstsäften. Vorteilhaft ist außerdem der sehr niedrige Wassergehalt des Rohstoffs Fruchtpulver, so dass auch der Gehalt an Flüssigkeit (Wasser und Alkohol) der Zusammensetzung in definierter Weise eingestellt werden kann. Vorteilhaft ist außerdem, dass das fein aufgelöste Fruchtpulver gut in Lösung bleibt, so dass der unerwünschte Effekt von sich am Boden eines Behälters absetzenden festen Fruchtbestandteilen vermindert ist.

Die Zusammensetzung enthält 4 bis 25 Gew.-% Fruchtpulver, vorzugsweise 9 bis 20 Gew.-%, besonders bevorzugt ca. 13 bis 16 Gew.-% Fruchtpulver.

Die Süßungskomponente der Zusammensetzung umfasst vorzugsweise Dextrose, Saccharose und Süßstoff.

Durch den Süßstoff, vorzugsweise Saccharin, kann die als angenehm empfundene Süße des Geschmacks erreicht werden ohne eine zu starke Erhöhung des Zuckeranteils, was sich auf die Konsistenz nachteilig auswirken würde.

Durch eine Kombination von 3 bis 9 Gew.-% Dextrose, 2 bis 7 Gew.-% Saccharose sowie Süßstoff lässt sich eine gewünschte, zum Fruchtgeschmack passende Süße der Snackzusammensetzung erreichen, bei der zugleich eine vorteilhafte Konsistenz erzielt werden kann. Für die Konsistenz sind insbesondere die Mengenanteile von Dextrose und Saccharose relevant, wobei deren Anteile wie angegeben begrenzt werden können, da die geschmacklich erforderliche Süße ergänzend durch den Süßstoff, vorzugsweise Saccharin, bewirkt wird.

Als Säuerungsmittel wird vorzugsweise Zitronensäure, Apfelsäure und/oder Weinsäure verwendet, besonders bevorzugt Zitronensäure, insbesondere Zitronensäure-Anhydrat.

Zur Abrundung oder Unterstützung des Geschmacks ist Aroma vorgesehen. Es können natürliche Aromastoffe oder Aromaextrakte verwendet werden. Vorzugsweise wird wenigstens ein synthetischer Aromastoff verwendet, beispielsweise eine Mischung aus natürlichen und synthetischen oder naturidentischen Aromastoffen.

Als Verdickungsmittel wird vorzugsweise Carrageen verwendet.

Als Konservierungsmittel wird vorzugsweise Kaliumsorbat verwendet. Das Konservierungsmittel verbessert die Lagerfähigkeit der verpackten Snackzusammensetzung bei Raumtemperatur.

Die Verpackung ist ein flexibles Behältnis, das flüssigkeitsdicht verschlossen ist.

Das Produkt kann daher ohne Gefahr des Aufplatzens des Behältnisses auf niedrige Temperaturen von beispielsweise -32°C gekühlt werden. Vorzugsweise ist das Behältnis ein Folienbeutel, insbesondere ein Folien-Schlauchbeutel. Vorzugsweise ist die Verpackung ein Folienbeutel aus einer Verbundstoff-Folie mit wenigstens einer Metall-Schicht und wenigstens einer Kunststoffschicht. Der Folienbeutel bildet vorzugsweise auf dem überwiegenden Teil seiner Länge einen schlauchförmigen, flexiblen Abschnitt. Durch Aufreißen eines Schlauchbeutels kann der Inhalt besonders einfach entnommen und in ein Trinkgefäß gefüllt werden oder direkt aus dem Schlauchbeutel verzehrt werden. Insbesondere kann bei im gekühlten Zustand erhöhter Viskosität der Inhalt des Schlauchbeutels leicht durch Zusammendrücken des Schlauchbeutels entnommen werden. Das Produkt kann somit bequem auch unterwegs verzehrt werden. Vorzugsweise ist die Zusammensetzung in Portionsgröße in einem flexiblen Behältnis eingeschlossen. Die Portionsgröße ist vorzugsweise im Bereich 10 bis 50 ml, besonders bevorzugt 20 ml.

Das flexible Behältnis hat vorzugsweise eine vorgeschwächte Aufreißlinie und/oder einen offenen Einschnitt an einer Einrißstelle, um das Aufreißen des Behältnisses zu vereinfachen. Vorzugsweise ist bei einem Behältnis in Form eines Folienbeutels ein Einschnitt am Rand des Folienbeutels und/oder eine mittels Lasern vorgeschwächte Aufreißlinie vorgesehen.

### Beschreibung von Ausführungsbeispielen

Im folgenden wird ein bevorzugtes Ausführungsbeispiel anhand der Zeichnung erläutert.

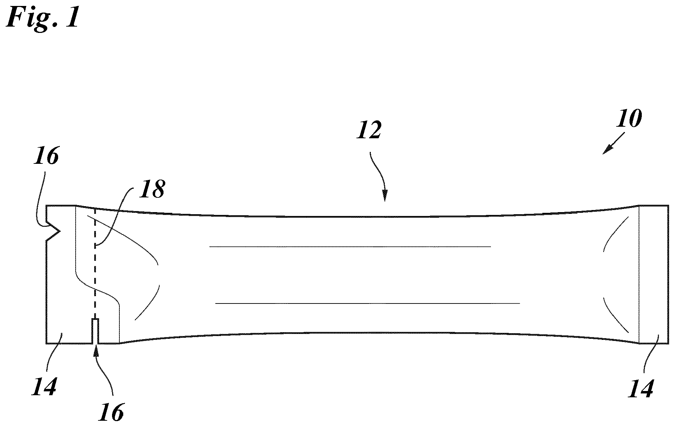

Die Zeichnungsfigur Fig. 1 zeigt das verpackte Alkohol-Snackprodukt mit einer Portionsgröße von 20ml.

Fig. 1 zeigt das in einem Folien-Schlauchbeutel 10 verpackte Alkohol-Snackprodukt. Der Schlauchbeutel ist ein Verbundstoff-Folienbeutel aus einer Verbundstoff-Folie mit wenigstens einer Aluminium-Schicht und wenigstens einer Kunststoffschicht. Der Schlauchbeutel 10 bildet auf dem hauptsächlichen Teil seiner Länge einen schlauchförmigen Abschnitt 12. Die Enden sind verschweißt. Insbesondere sind Endbereiche 14 flach verschweißt. Es sind zwei Beispiele einer Einrisshilfe in Form eines Einschnitts 16 im flachen Endbereich 14 gezeigt. Eine seitliche Einrisshilfe ist an einer Aufreißlinie 18 angeordnet.

### Beispiel 1

Die fruchthaltige Alkohol-Snackzusammensetzung wird in vorteilhafter Weise aus Wasser, Fruchtpulver, Ethylalkohol bzw. Weingeist, Dextrose, Zucker, Carrageen, Zitronensäure, Aroma, Saccharin und Kaliumsorbat hergestellt. Dabei hat sich folgende gewichtsmäßige Zusammensetzung als besonders vorteilhaft herausgestellt:

| **Rohstoff** | **Gew.-%** |
|---|---|
| Wasser | ca. 58 |
| Fruchtpulver Erdbeer | 14,7 |
| Weingeist 96,4 Vol.-% | 11,8 |
| Dextrose Anhydrat | 5,9 |
| Zucker | 4,7 |
| Carrageen | 2,4 |
| Zitronensäure | 1,9 |
| Aroma Erdbeer | 0,29 |
| Saccharin | 0,017 |
| Kaliumsorbat | 0,15 |

Die erhaltene Mischung wurde in flexible Schlauchbeutel gefüllt, und die Folien-schlauchbeutel wurden durch Verschweißen versiegelt.

Das Produkt mit der erhaltenen Mischung wurde in Tests bis zu -32° C in ruhendem Zustand gekühlt, d.h. ohne dabei zu rühren. Dabei blieb eine weiche, pastöse, gelartige Konsistenz erhalten, und es bildeten sich keine im Mund unangenehmen, scharfkantigen Eiskristalle.

Die Zusammensetzung hat insbesondere im gekühlten Zustand einen Geschmack, der als besonders angenehm beschrieben wird.

Es kann beispielsweise Erdbeer-Fruchtpulver und Aroma der Geschmacksrichtung Erdbeere verwendet werden. Es können beispielsweise auch Fruchtpulver schwarze Johannisbeere, Ananas oder Zitrone verwendet werden, mit jeweiligen ergänzenden oder kontrastierenden Aromen.

Es wird vorzugsweise ein Fruchtpulver mit dem Trägerstoff Maltodextrin und dem Säureregulator Zitronensäure verwendet. Das Fruchtpulver kann beispielsweise ca. 40% Fruchtanteil in der Trockenmasse haben.

In Tests wurde nur für eine Kombination von zusätzlich hinzugefügtem Traubenzucker und Zucker, ergänzt durch einen Süßstoff, das gewünschte Ergebnis hinsichtlich Geschmack und Konsistenz im gekühlten Zustand erzielt. Es hat sich gezeigt, dass eine zusätzliche Zugabe von beispielsweise 2 oder 3 Gew.-% Maltodextrin nicht mehr zu einem befriedigenden Ergebnis führt.

Die Konsistenz lässt sich bei einem gewünschten Alkoholgehalt durch die Menge von Traubenzucker und Zucker einstellen. Bei Verwendung von Fruchtpulver mit einem höheren natürlichen Anteil an Zuckerarten kann die Menge des zusätzlich zugesetzten Zuckers und Traubenzuckers innerhalb der angegebenen Grenzen entsprechend verringert werden.

Anstelle von Weingeist (Ethylalkohol) kann eine Spirituose, insbesondere eine Spirituose mit wenigstens 40 Vol.-% Alkoholgehalt verwendet werden, wie beispielsweise Wodka, Whisky, Gin, Weinbrand, Rum oder Korn. Dabei kann die Menge des zusätzlich zugegebenen Aromas innerhalb der angegebenen Grenzen verringert werden.

## Patentansprüche

1. Verfahren zum Herstellen eines verpackten, konsumfertig gemischten, fruchthaltigen Alkohol-Snackprodukts, umfassend:
(a) Herstellen einer fruchthaltigen Alkohol-Snackzusammensetzung durch Mischen von:
Ethylalkohol und/oder wenigstens eine Spirituose mit wenigstens 37,5% Vol.-% Ethylalkohol, in einer Gesamtmenge entsprechend einem Anteil an der Alkohol-Snackzusammensetzung von 5 bis 20 Gew.-% Ethylalkohol,
4 bis 25 Gew.-% Fruchtpulver, wobei das Fruchtpulver optional wenigstens einen Trägerstoff und/oder wenigstens einen Säureregulator enthält,
zusätzlich 3 bis 9 Gew.-% Dextrose und 2 bis 7 Gew.-% Saccharose,
Süßstoff, Säuerungsmittel, Aroma, Verdickungsmittel, Konservierungsmittel,
Rest Wasser; und
(b) Einfüllen der Alkohol-Snackzusammensetzung in ein flexibles Behältnis (10) und Verschließen des Behältnisses.

2. Verfahren nach Anspruch 1, bei dem die Alkohol-Snackzusammensetzung in ein flexibles Behältnis (10) in Form eines Folienbeutels eingefüllt wird.

3. Verfahren nach Anspruch 1 oder 2, bei dem die Alkohol-Snackzusammen-setzung in ein flexibles Behältnis (10) mit Portionsgröße eingefüllt wird.

4. Verfahren nach einem der vorstehenden Ansprüche, bei dem der Anteil von Süßstoff 0,010 bis 0,025 Gew.-% ist.

5. Verfahren nach einem der vorstehenden Ansprüche, bei dem der Anteil an Säuerungsmittel 0,9 bis 3 Gew.-% ist.

6. Verfahren nach einem der vorstehenden Ansprüche, bei dem der Anteil an Aroma 0,13 bis 0,45 Gew.-% ist.

7. Verfahren nach einem der vorstehenden Ansprüche, bei dem der Anteil an Verdickungsmittel 1,4 bis 3,5 Gew.-% ist.

8. Ein verpacktes, konsumfertig gemischtes, fruchthaltiges Alkohol-Snackprodukt, insbesondere hergestellt nach einem der Ansprüche 1 bis 7, umfassend in Kombination:
(a) eine fruchthaltige Alkohol-Snackzusammensetzung, umfassend eine Mischung aus:
Ethylalkohol und/oder wenigstens eine Spirituose mit wenigstens 37,5% Vol.-% Ethylalkohol, in einer Gesamtmenge entsprechend einem Anteil an der Alkohol-Snackzusammensetzung von 5 bis 20 Gew.-% Ethylalkohol,
4 bis 25 Gew.-% Fruchtpulver, wobei das Fruchtpulver optional wenigstens einen Trägerstoff und/oder wenigstens einen Säureregulator enthält,
zusätzlich 3 bis 9 Gew.-% Dextrose und 2 bis 7 Gew.-% Saccharose,
Süßstoff, Säuerungsmittel, Aroma, Verdickungsmittel, Konservierungsmittel,
Rest Wasser; und
(b) ein flexibles Behältnis , in welchem die Alkohol-Snackzusammensetzung eingeschlossen ist.

9. Alkohol-Snackprodukt nach Anspruch 8, bei dem das flexible Behältnis ein Folienbeutel ist.

## Claims

1. Method for manufacturing a packaged, ready-for-consumption-mixed fruit containing alcohol snack product, comprising:
(a) manufacturing a fruit containing alcohol snack composition by mixing of:
ethyl alcohol and/or at least one spirit having at least 37.5 vol% of ethyl alcohol, in a total quantity corresponding to a percentage of ethyl alcohol of 5 to 20 vol% of the alcohol snack composition,
4 to 25 vol% of fruit powder, wherein the fruit powder optionally contains at least one carrier substance and/or at least one acidity regulator,
additionally, 3 to 9 vol% dextrose and 2 to 7 vol% saccharose,
sweetener, acidifier, flavor, thickening agent, preserving agent,
the balance being water; and
(b) filling the alcohol snack composition into a flexible container (10) and closing the container.

2. Method according to claim 1, wherein the alcohol snack composition is filled into a flexible container (10) in the form of a foil bag.

3. Method according to claim 1 or 2, wherein the alcohol snack composition is filled into a flexible container (10) having a one portion size.

4. Method according to any one of the preceding claims, wherein the percentage of sweetener is 0.010 to 0.025 vol%.

5. Method according to any one of the preceding claims, wherein the percentage of acidifier is 0.9 to 3 vol%.

6. Method according to any one of the preceding claims, wherein the percentage of flavor is 0.13 to 0.45 vol%.

7. Method according to any one of the preceding claims, wherein the percentage of thickening agent is 1.4 to 3.5 vol%.

8. A packaged, ready-for-consumption-mixed fruit containing alcohol snack product, in particular when manufactured according to any one of the claims 1 to 7, comprising in combination:
(a) a fruit containing alcohol snack composition, comprising a mixture of:
ethyl alcohol and/or at least one spirit having at least 37.5 vol% of ethyl alcohol, in a total quantity corresponding to a percentage of ethyl alcohol of 5 to 20 vol% of the alcohol snack composition,
4 to 25 vol% of fruit powder, wherein the fruit powder optionally contains at least one carrier substance and/or at least one acidity regulator,
additionally, 3 to 9 vol% dextrose and 2 to 7 vol% saccharose,
sweetener, acidifier, flavor, thickening agent, preserving agent,
the balance being water; and
(b) a flexible container (10), which the alcohol snack composition is encased in.

9. Alcohol snack product according to claim 8, wherein the flexible container is a foil bag.

## Revendications

1. Procédé pour fabriquer un produit de grignotage emballé à base d'alcool, contenant des fruits, sous forme de mélange prêt à la consommation, comportant les étapes consistant à :
(a) fabriquer une composition de grignotage à base d'alcool contenant des fruits en mélangeant :
de l'alcool éthylique et/ou au moins un spiritueux avec au moins 37,5 % en volume d'alcool éthylique, dans une quantité totale correspondant à une proportion de la composition de grignotage à base d'alcool représentant de 5 à 20 % en poids d'alcool éthylique,
4 à 25 % en poids de poudre de fruits, la poudre de fruits contenant facultativement au moins une substance de support et/ou au moins un régulateur d'acidité,
également 3 à 9 % en poids de dextrose et 2 à 7 % en poids de saccharose,
un édulcorant, un acidifiant, un arôme, un épaississant, un conservateur, le reste étant de l'eau, et
(b) verser la composition de grignotage à base d'alcool dans un sachet souple (10) et sceller le sachet.

2. Procédé selon la revendication 1, dans lequel la composition de grignotage à base d'alcool est versée dans un sachet souple (10) ayant la forme d'un sachet en film.

3. Procédé selon la revendication 1 ou 2, dans lequel la composition de grignotage à base d'alcool est versée dans un sachet souple (10) par taille de portion.

4. Procédé selon l'une des revendications précédentes, dans lequel la proportion d'édulcorant est de 0,010 à 0,025 % en poids.

5. Procédé selon l'une des revendications précédentes, dans lequel la proportion d'acidifiant est de 0,9 à 3 % en poids.

6. Procédé selon l'une des revendications précédentes, dans lequel la proportion d'arôme est de 0,13 à 0,45 % en poids.

7. Procédé selon l'une des revendications précédentes, dans lequel la proportion d'épaississant est de 1,4 à 3,5 % en poids.

8. Produit de grignotage emballé à base d'alcool, contenant des fruits, sous forme de mélange prêt à la consommation, en particulier fabriqué selon l'une des revendications 1 à 7, comportant en combinaison :
(a) une composition de grignotage à base d'alcool contenant des fruits, comportant un mélange constitué :
d'alcool éthylique et/ou d'au moins un spiritueux avec au moins 37,5 % en volume d'alcool éthylique, dans une quantité totale correspondant à une proportion de la composition de grignotage à base d'alcool représentant de 5 à 20 % en poids d'alcool éthylique,
4 à 25 % en poids de poudre de fruits, la poudre de fruits contenant facultativement au moins une substance de support et/ou au moins un régulateur d'acidité,
également 3 à 9 % en poids de dextrose et 2 à 7 % en poids de saccharose,
un édulcorant, un acidifiant, un arôme, un épaississant, un conservateur, le reste étant de l'eau, et
(b) un sachet souple dans lequel est enfermée la composition de grignotage à base d'alcool.

9. Produit de grignotage à base d'alcool selon la revendication 8, dans lequel le sachet souple est un sachet en film.
